# EUROPEAN PATENT APPLICATION

(11) **EP 4 691 819 A1**
(43) Date of publication of application: **11.02.2026**
(21) Application number: 23940061.7
(22) Date of filing: 06.06.2023
(51) Int. Cl.: B60J 10/70, B60J 1/20

(54) **GLASS EDGE-COVERING ASSEMBLY**

(71) Applicant: Fuyao Glass Industry Group Co., Ltd., Fuqing, Fujian 350300 (CN)
(72) Inventor: ZHANG, Ke, Fuzhou, Fujian 350300 (CN); ZHANG, Jinquan, Fuzhou, Fujian 350300 (CN); LIU, Xianping, Fuzhou, Fujian 350300 (CN); CHEN, Hua, Fuzhou, Fujian 350300 (CN); JIANG, Lixing, Fuzhou, Fujian 350300 (CN)
(74) Representative: Patentanwälte Olbricht Buchhold Keulertz
(86) International application number: PCT/CN2023/098580
(87) International publication number: WO 2024/250171

(57) **Abstract**

A glass encapsulation assembly, including a glass substrate and a first encapsulation. The glass substrate has a periphery, a portion of which is wrapped by the first encapsulation to form a wrapped edge, and the other portion of which is exposed outside the first encapsulation to form an exposed edge. The wrapped edge is provided with at least one snap-fit portion, which is snap-fitted with the first encapsulation to prevent the first encapsulation from being separated from the wrapped edge. The present disclosure can solve the problem of warping and deformation of glass caused by shrinkage deformation of the encapsulation.

## Description

### TECHNICAL FIELD

The present disclosure relates to the technical field of glass, and particularly to a glass encapsulation assembly.

### BACKGROUND

An injection-molding production process of a glass encapsulation assembly structure is as follows: firstly, a glass plate and injection-molding particles (i.e., raw materials) are placed into a first mold cavity for injection molding of a hard encapsulation, so as to obtain a semi-finished injection-molded product; next, the semi-finished injection-molded product is placed into a second mold cavity for injection molding of a soft encapsulation, so that the injection-molding production process of the product is completed. In the existing glass encapsulation assembly, the entire periphery of the glass plate is wrapped by the hard encapsulation.

### SUMMARY

The present disclosure provides a glass encapsulation assembly to solve the problem of warping and deformation of glass caused by shrinkage and deformation of an encapsulation.

Embodiments of the present disclosure provide a glass encapsulation assembly, which includes a glass substrate and a first encapsulation. The glass substrate has a periphery. A portion of the periphery is wrapped by the first encapsulation to form a wrapped edge, and the other portion of the periphery is exposed outside the first encapsulation to form an exposed edge. The wrapped edge is provided with at least one snap-fit portion, which is snap-fitted with the first encapsulation to prevent the first encapsulation from being separated from the wrapped edge.

In some embodiments, at least one of the at least one snap-fit portion is a groove recessed inward from the wrapped edge into the glass substrate, and the first encapsulation fills the groove to form a snap fit with it.

In some embodiments, a depth of the groove is not less than 1.0 mm.

In some embodiments, at least one of the at least one snap-fit portion is a protrusion that protrudes outward the wrapped edge away from the glass substrate, and the first encapsulation wraps the protrusion to form a snap fit with it.

In some embodiments, a height of the protrusion is not less than 1.0 mm.

In some embodiments, the periphery includes a plurality of edges; the exposed edge includes at least one of the edges, or the exposed edge is a portion of one of the edges.

In some embodiments, the periphery includes at least three edges; the wrapped edge includes at least two of the edges; at least one of the at least two edges is provided with one or more of the snap-fit portions.

In some embodiments, the first encapsulation has a first end and a second end opposite to each other in a direction around the wrapped edge, the wrapped edge is provided with at least two snap-fit portions corresponding to the first end and the second end, and the first end and the second end are snap-fitted with the snap-fit portions, respectively.

In some embodiments, the first end and the second end are located at two corners of the periphery, respectively, the two corners are provided with the snap-fit portions, respectively, and the first end and the second end are snap-fitted with the snap-fit portions located at the two corners, respectively.

In some embodiments, the first encapsulation extends continuously along the wrapped edge.

In some embodiments, the glass encapsulation assembly further includes a second encapsulation that wraps at least a portion of the first encapsulation and the entire or part of the periphery of the glass substrate.

In some embodiments, the first encapsulation is a hard encapsulation, and the second encapsulation is a soft encapsulation.

In the glass encapsulation assembly according to the embodiments of the present disclosure, by disposing the hard encapsulation to wrap a portion, rather than the entire, of the periphery of the glass substrate, it is possible to prevent the warping and deformation of the glass substrate caused by the shrinkage and deformation of the hard encapsulation, reduce the consumption of raw materials for the hard encapsulation, and lower the cost. By disposing the snap-fit portion, the hard encapsulation and the glass substrate can be firmly bonded together to prevent the hard encapsulation from falling off the glass substrate.

### BRIEF DESCRIPTION OF THE DRAWINGS

For a clearer illustration of technical features in the embodiments of the present disclosure or the prior art, a brief description of the drawings for the embodiments or the prior art will be given below. The drawings described below involve only some embodiments of this disclosure. For those of ordinary skill in the art, other drawings can be derived from these drawings without any inventive efforts. In the drawings:
FIGS. 1 to 4 illustrate structural diagrams of a glass substrate in different embodiments of the present disclosure.
FIGS. 5 and 6 illustrate schematic diagrams of the binding of a glass substrate and a first encapsulation in different embodiments of the present disclosure.
FIG. 7 illustrates a structural diagram of a glass encapsulation assembly according to an embodiment of the present disclosure.
FIG. 8 illustrates a cross-sectional view taken along line A-A in FIG. 7.
FIG. 9 illustrates a cross-sectional view taken along line B-B in FIG. 7.
FIG. 10 illustrates a cross-sectional view taken along line C-C in FIG. 7.
FIG. 11 illustrates a structural diagram of a glass encapsulation assembly according to another embodiment of the present disclosure.
FIG. 12 illustrates a cross-sectional view taken along line D-D in FIG. 11.

### DETAILED DESCRIPTION OF EMBODIMENTS

For a better understanding of the technical features of the present disclosure, a clear and complete description of the embodiments of the present disclosure will be set forth with reference to the drawings. The described embodiments are only a part, rather than all, of the embodiments of the present disclosure. All other embodiments derived by persons skilled in the art from the embodiments of the present disclosure without making inventive efforts shall fall within the scope of the present disclosure.

As used herein, the term "include/comprise" and variants thereof mean an openended inclusion, that is, "including but not limited to". Unless otherwise stated, the term "or" means "and/or". The term "based on" means "at least partially based on". The terms "an exemplary embodiment" and "an embodiment" mean "at least one exemplary embodiment". The term "another embodiment" means "at least one other embodiment". The terms "first", "second" and so on may refer to the same or different objects.

In the existing glass encapsulation assemblies, the hard encapsulation encloses the entire periphery of the glass plate. Through researches, the inventor has found that the shrinkage rate of the hard encapsulation material is approximately 5‰ to 10‰. After the hard encapsulation material is injection-molded onto the glass plate, a large shrinkage deformation will be produced. In an extreme environment, such as a low-temperature environment of -30°C, the shrinkage deformation becomes even greater, with the shrinkage rate reaching as high as 15%o. When the hard encapsulation fully encloses the glass plate, the shrinkage and deformation of the hard encapsulation will cause the warping and deformation of the glass plate, resulting in the glass encapsulation assembly being unqualified.

To solve the above problem, the present disclosure provides a glass encapsulation assembly, which includes a glass substrate and a first encapsulation.

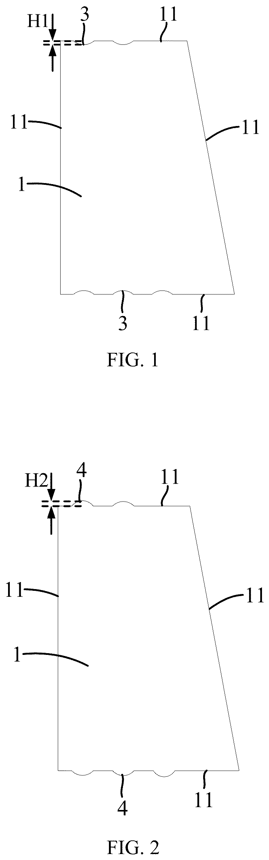

FIGS. 1 to 4 illustrate structural diagrams of a glass substrate 1 in different embodiments of the present disclosure. As illustrated in FIGS. 1 to 4, the glass substrate 1 has a periphery, which includes all outer edges 11 of the glass substrate 1.

In the examples of FIGS. 1 to 4, the glass substrate 1 is quadrilateral. Therefore, the periphery of the glass substrate 1 includes four edges 11 connected end to end in sequence. The glass substrate 1 may be square or trapezoidal, but the present disclosure is not limited thereto, and the glass substrate 1 may also be triangular, pentagonal, or of any other shape. The edges 11 of the glass substrate 1 may have a straight or curved shape, and the curved shape may be an arc or any other curved form.

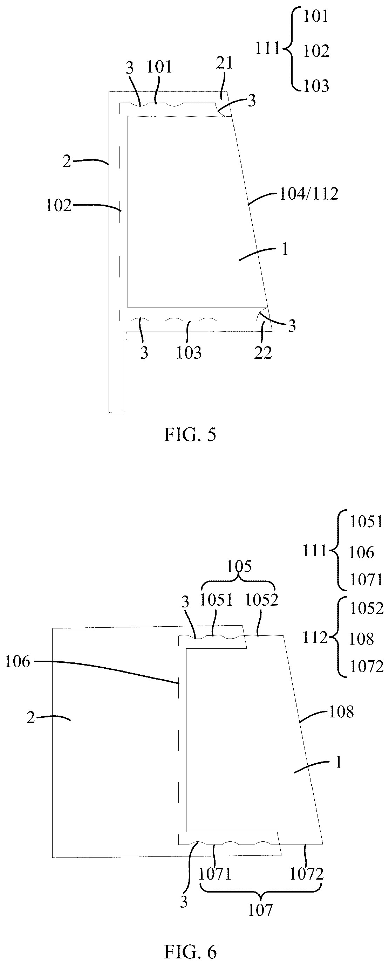

FIGS. 5 and 6 illustrate schematic diagrams of the binding of a glass substrate 1 and a first encapsulation 2 in different embodiments of the present disclosure.

As illustrated in FIGS. 5 and 6, the first encapsulation 2 wraps a portion, rather than the entire, of the periphery of the glass substrate 1. Thus, the other portion of the periphery of the glass substrate 1 is exposed outside the first encapsulation 2 and not wrapped by the first encapsulation 2. In other words, the first encapsulation 2 extends along the periphery of the glass substrate 1 but is not self-closed, so that the first encapsulation 2 forms a partial enclosure rather than a full enclosure around the glass substrate 1. The advantage of this configuration is that even if undergoing shrinkage and deformation, the first encapsulation 2 does not extrude the glass substrate 1, thereby preventing warping and deformation of the glass substrate 1, reducing the consumption of raw materials for the first encapsulation 2, and lowering the cost.

For the convenience of description, hereinafter the portion of the periphery wrapped by the first encapsulation 2 is referred to as a wrapped edge, and the other portion of the periphery not wrapped by the first encapsulation 2 is referred to as an exposed edge.

In the example of FIG. 5, edges 101, 102 and 103 of the glass substrate 1 are wrapped by the first encapsulation 2, so that the edges 101, 102 and 103 constitute the wrapped edge 111. An edge 104 is not wrapped by the first encapsulation 2, so that the edge 104 serves as an exposed edge 112.

Since the first encapsulation 2 only wraps a portion of the periphery of the glass substrate 1, the first encapsulation 2 tends to fall off the glass substrate 1. To avoid this problem, the wrapped edge 111 is provided with at least one snap-fit portion, which is snap-fitted with the first encapsulation 2 to prevent the first encapsulation 2 from being separated from the wrapped edge 111, so that the first encapsulation 2 and the glass substrate 1 can be firmly bonded together.

In some embodiments, as illustrated in FIGS. 1 and 5, the at least one snap-fit portion is a groove 3 recessed inward from the edge 11 (i.e., the wrapped edge 111) into the glass substrate 1. When the first encapsulation 2 is formed on the glass substrate 1 by injection molding, the first encapsulation 2 not only wraps a portion of the periphery of the glass substrate 1 but also fills the groove 3. That is, the first encapsulation 2 is embedded in the groove 3 so as to form a snap fit with the groove 3, thereby preventing the first encapsulation 2 from falling off the glass substrate 1.

Optionally, the groove 3 may be arc-shaped, square, triangular, trapezoidal, rhomboidal, fan-shaped, crescent-shaped, S-shaped, or of any other shape.

Exemplarily, as illustrated in FIGS. 1 and 5, the wrapped edge 111 is provided with a plurality of grooves 3, which may have the same or different shapes, or some of the grooves 3 have the same shape and the others have different shapes.

Optionally, as illustrated in FIG. 1, a depth H1 of the groove 3 is not less than 1.0 mm to enhance the firmness and stability of the snap fit. For example, the depth H1 may be 1.0 mm, 2.0 mm, or 3.0 mm.

Optionally, the depth H1 of the groove 3 is not greater than a width of the first encapsulation 2 to enable the groove 3 to be fully covered by the first encapsulation 2. Specifically, the depth H1 of the groove 3 is not greater than 40 mm. For example, the depth H1 of the groove 3 ranges from 2 mm to 10 mm.

Exemplarily, the wrapped edge 111 is provided with a plurality of grooves 3, which may have the same or different depths, or some of the grooves 3 have the same depth and the others have different depths.

In this embodiment, the groove 3 may be obtained by cutting glass. The cutting methods include but are not limited to high-pressure water jet cutting, laser cutting, high-speed drill cutting, etc.

In another embodiment, as illustrated in FIG. 2, at least one of the at least one snap-fit portion is a protrusion 4 that protrudes outward from the edge 11 (i.e., the wrapped edge 111) away from the glass substrate 1. When the first encapsulation 2 is formed on the glass substrate 1 by injection molding, the first encapsulation 2 wraps not only the wrapped edge of the glass substrate 1 but also the protrusion 4, thereby achieving a snap fit with the protrusion 4 to prevent the first encapsulation 2 from falling off the glass substrate 1.

Optionally, the protrusion 4 may be circular, semicircular, triangular, square, trapezoidal, rhomboidal, fan-shaped, crescent-shaped, S-shaped, or of any other shape.

Exemplarily, as illustrated in FIG. 2, the wrapped edge is provided with a plurality of protrusions 4, which may have the same or different shapes, or some of the protrusions 4 have the same shape and the others have different shapes.

Optionally, as illustrated in FIG. 2, a height H2 of the protrusion 4 is not less than 1.0 mm to enhance the firmness and stability of the snap fit. For example, the height H2 may be 1.0 mm, 2.0 mm, or 3.0 mm.

Optionally, the height H2 of the protrusion 4 is not greater than 40 mm. For example, the height H2 of the protrusion 4 ranges from 2 mm to 10 mm.

Exemplarily, the wrapped edge 111 is provided with a plurality of protrusions 4, which may have the same or different heights, or some of the protrusions 4 have the same height and the others have different heights.

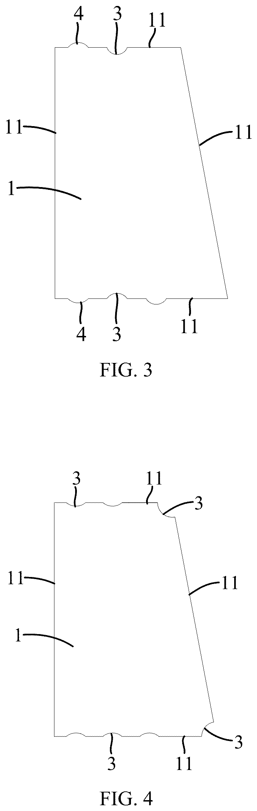

In still another embodiment, as illustrated in FIG. 3, the wrapped edge 111 is provided with at least two snap-fit portions, in which at least one of the snap-fit portions is a groove 3 recessed inward from the wrapped edge 111 into the glass substrate 1, and at least one of the snap-fit portions is a protrusion 4 that protrudes outward from the wrapped edge away from the glass substrate 1. In this embodiment, by disposing both the groove 3 and the protrusion 4, the first encapsulation 2 is snap-fitted with the glass substrate 1 in different directions toward an inner side and an outer side of the glass substrate 1, thereby further enhancing the firmness and stability of the snap fit.

The shapes and sizes of the groove 3 and the protrusion 4 in this embodiment may be set with reference to the aforementioned embodiments, and will not be repeated here.

In some embodiments, as illustrated in FIG. 5, the wrapped edge 111 is provided with at least two snap-fit portions. The first encapsulation 2 has a first end 21 and a second end 22 opposite to each other in a direction surrounding the wrapped edge 111. The first end 21 and second end 22 are each snap-fitted with one snap-fit portion. Since both ends of the first encapsulation 2 are snap-fitted with the snap-fit portions, it is possible to more effectively position the first encapsulation 2 and prevent the first encapsulation 2 from falling off the glass substrate 1.

Optionally, as illustrated in FIG. 5, the first end 21 and the second end 22 of the first encapsulation 2 are located at two corners of the periphery, respectively, and the two corners are provided with snap-fit portions, respectively. The first end 21 and the second end 22 are snap-fitted with the snap-fit portions located at the two corners, respectively, thereby effectively preventing the first encapsulation 2 from falling off the glass substrate 1. For example, the snap-fit portions at the two corners are both grooves 3 (as illustrated in FIG. 5). Such groove-shaped corner is less likely to be damaged than the right-angled corner.

In some embodiments, the periphery includes a plurality of edges 11. As illustrated in FIGS. 5 and 6, the exposed edge 112 includes at least one edge 11, that is, at least one edge 11 of the periphery is exposed outside the first encapsulation 2 without being wrapped by the first encapsulation 2. Alternatively, the exposed edge 112 is a portion of one edge 11, that is, a portion of one edge 11 of the periphery is exposed outside the first encapsulation 2 without being wrapped by the first encapsulation 2.

In an example, the periphery includes three edges 11. The first and second edges of the three edges 11 are both wrapped by the first encapsulation 2. The third edge of the three edges 11 is either completely exposed outside the first encapsulation 2, or has a portion that is exposed outside the first encapsulation 2 while the other portion is wrapped by the first encapsulation 2.

In another example, as illustrated in FIG. 5, the periphery includes four edges. The edge 101, the edge 102 and the edge 103 among the four edges are all wrapped by the first encapsulation 2. The edge 104 is either completely exposed outside the first encapsulation 2 (as illustrated in FIG. 5), or has a portion that is exposed outside the first encapsulation 2 while the other portion is wrapped by the first encapsulation 2 (not illustrated). In this example, the edge 101, the edge 102 and the edge 103 constitute the wrapped edge 111, and the edge 104 is the exposed edge 112.

In another example, as illustrated in FIG. 6, the periphery includes four edges, in which an edge 106 is completely wrapped by the first encapsulation 2, a portion 1051 of an edge 105 and a portion 1071 of an edge 107 are wrapped by the first encapsulation 2, the other portion 1052 of the edge 105 and the other portion 1072 of the edge 107 are exposed outside the first encapsulation 2 without being wrapped by the first encapsulation 2, and an edge 108 is completely exposed outside the first encapsulation 2 without being wrapped by first encapsulation 2. In this example, the edge 106, the portion 1051 of the edge 105 and the portion 1071 of the edge 107 constitute the wrapped edge 111, while the edge 108, the other portion 1052 of the edge 105 and the other portion 1072 of the edge 107 constitute the exposed edge 112.

In some embodiments, as illustrated in FIGS. 5 and 6, the periphery includes at least three edges 11. The wrapped edge 111 includes at least two edges 11, which may be connected in sequence, and at least one of the at least two edges 11 is provided with one or more snap-fit portions.

Optionally, each of the at least two edges 11 is provided with one or more snap-fit portions.

Optionally, some edges 11 are provided with one or more snap-fit portions, and other edges 11 are provided with no snap-fit portion. For example, in the example of FIG. 5, the edge 102 is provided with no snap-fit portion, and the edges 101 and 103 are provided with the grooves 3. In the example of FIG. 6, the edge 106 is provided with no snap-fit portion, and the edges 105 and 107 are provided with the grooves 3.

In some embodiments, as illustrated in FIGS. 5 and 6, the first encapsulation 2 extends continuously along the wrapped edge 111 of the glass substrate 1, that is, the first encapsulation 2 is an integrated structure, and the first encapsulation 2 may be formed by injection molding to wrap part of the periphery of the glass substrate 1.

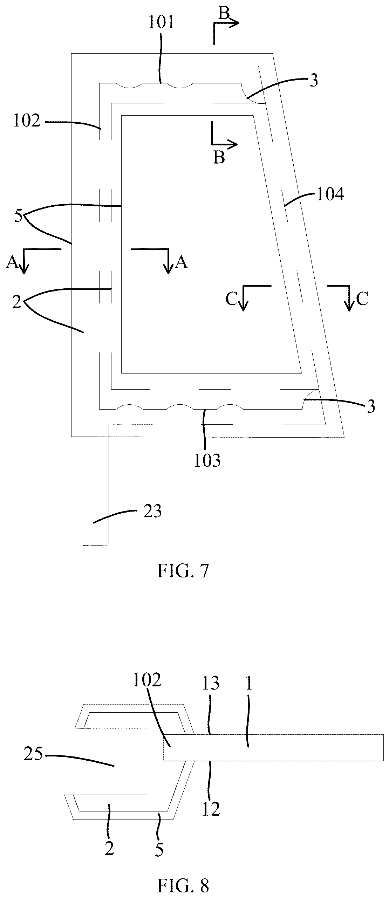

In some embodiments, as illustrated in FIGS. 7 and 8, the glass encapsulation assembly further includes a second encapsulation 5, which wraps at least a portion of the first encapsulation 2 and the entire or part of the periphery of the glass substrate 1. In FIG. 7, two leads corresponding to the reference numeral "2" point to an inner side edge and an outer side edge of the first encapsulation 2, respectively, and two leads corresponding to the reference numeral "5" point to an inner side edge and an outer side edge of the second encapsulation 5.

The first encapsulation 2 may be a hard encapsulation, which can serve as a guide rail to guide the lifting of the glass. The hard encapsulation may be made of one or more selected from the group consisting of PP, PVC, PA, POM, PC, ABS and SAN.

The second encapsulation 5 may be a soft encapsulation, which can serve as an appearance covering layer of the glass, or serve as an encapsulation tongue to provide a sealing function, an installation or a support function. The second encapsulation 5 has a lower dimensional stability than the first encapsulation 2. The soft encapsulation may be made of one or more selected from the group consisting of TPE, PVC, PU, and EPDM.

FIG. 7 illustrates a structural diagram of a glass encapsulation assembly according to an embodiment of the present disclosure. As illustrated in FIG. 7, the second encapsulation 5 wraps the first encapsulation 2 and the periphery of the glass substrate 1 along an entire circumference of the glass substrate 1. The first encapsulation 2 has a protruding strip 23 that is not wrapped by the second encapsulation 5.

FIG. 8 illustrates a cross-sectional view taken along line A-A in FIG. 7. As illustrated in FIG. 8, at the edge 102 of the glass substrate 1, the second encapsulation 5 wraps a portion of the first encapsulation 2 adjacent to the glass substrate 1, but does not wrap the other portion of the first encapsulation 2 that faces away from the glass substrate 1, so that the other portion of the first encapsulation 2 is formed with a guide groove 25 that is not covered by the second encapsulation 5. The guide groove 25 may serve to guide the lifting of vehicle glass.

In the example of FIG. 8, the second encapsulation 5 is disposed on both an inner side and an outer side of the edge 102 of the glass substrate 1, and is in sealed engagement with both an inner surface 12 and an outer surface 13 of the glass substrate 1. Alternatively, the second encapsulation 5 may be disposed on only one of the inner side and the outer side of the edge 102 of the glass substrate 1, rather than being disposed on the other one of them.

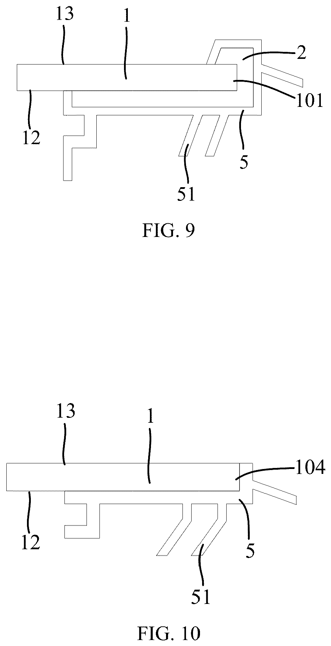

FIG. 9 illustrates a cross-sectional view taken along line B-B in FIG. 7. As illustrated in FIG. 9, at the edge 101 of the glass substrate 1, the second encapsulation 5 completely wraps the first encapsulation 2. A lip 51 is disposed on an outer surface of the second encapsulation 5 that faces away from the glass substrate 1. The lip 51 is used to be in contact with the vehicle body sheet metal, so that the encapsulation has better sealing performance in terms of dust resistance, water resistance, wind resistance and noise prevention.

In the example of FIG. 9, the second encapsulation 5 is disposed on both an inner side and an outer side of the edge 101 of the glass substrate 1, and is in sealed engagement with both an inner surface 12 and an outer surface 13 of the glass substrate 1. Alternatively, the second encapsulation 5 may be disposed on only one of the inner side and the outer side of the edge 101 of the glass substrate 1, rather than being disposed on the other one of them.

FIG. 10 illustrates a cross-sectional view taken along line C-C in FIG. 7. As illustrated in FIG. 10, at the edge 104 of the glass substrate 1, the second encapsulation 5 directly wraps the edge 104 of the glass substrate 1. A lip 51 is disposed on an outer surface of the second encapsulation 5 that faces away from the glass substrate 1.

In the example of FIG. 10, the second encapsulation 5 is disposed on an outer side of the edge 104 of the glass substrate 1 and is in sealed engagement with an inner surface 12, rather than being disposed on an inner side of the edge 104 of the glass substrate 1. Alternatively, the second encapsulation 5 may be disposed on both the inner side and the outer side of the edge 104 of the glass substrate 1.

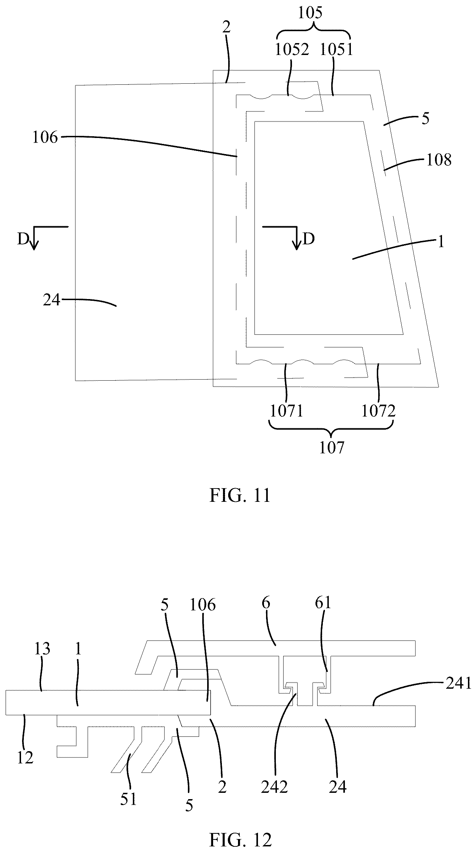

FIG. 11 illustrates a structural diagram of a glass encapsulation assembly according to another embodiment of the present disclosure. As illustrated in FIG. 11, the second encapsulation 5 wraps the first encapsulation 2 and the periphery of the glass substrate 1 along an entire circumference of the glass substrate 1, and the first encapsulation 2 has a protruding plate 24 that is not wrapped by the second encapsulation 5.

FIG. 12 illustrates a cross-sectional view taken along line D-D in FIG. 11. As illustrated in FIG. 12, a first hook 242 is disposed on an outer surface 241 of the protruding plate 24, an exterior trim panel 6 is disposed on the outer side of the first encapsulation 2, a second hook 61 is provided on the exterior trim panel 6, and the first hook 242 is snap-fitted with the second hook 61, thereby fixing the exterior trim panel 6 on the outer side of the first encapsulation 2. The exterior trim panel 6 can enhance the appearance of an automobile and also improve the grade of the automobile.

In the example of FIG. 12, the second encapsulation 5 is disposed on both an outer side and an inner side of the edge 106 of the glass substrate 1, and is in sealed engagement with an inner surface 12 and an outer surface 13 of the glass substrate 1. Alternatively, the second encapsulation 5 may be disposed on only one of the inner side and the outer side of the edge 106 of the glass substrate 1, rather than being disposed on the other one of them.

In some embodiments, a process for preparing the glass encapsulation assembly according to the embodiments of the present disclosure includes the following steps.

Firstly, the glass substrate and a raw material of the first encapsulation 2 are placed into a first mold cavity, where the raw material of the first encapsulation 2 is placed at a predetermined portion of the periphery of the glass substrate. Through an injection molding process, the first encapsulation 2 that wraps the portion of the periphery of the glass substrate and is snap-fitted with the snap-fit portion is obtained, thus obtaining a semi-finished injection-molded product.

Next, the semi-finished injection-molded product and a raw material of the second encapsulation 5 are placed into a second mold cavity, where the raw material of the second encapsulation 5 is placed at a predetermined position (e.g., on a portion of the first encapsulation 2 and the entire periphery of the glass substrate 1). Through an injection molding process, the second encapsulation 5 that wraps at least a portion of the first encapsulation 2 and the entire or part of the periphery of the glass substrate 1 is obtained, thus obtaining a finished injection-molded product. This completes the injection molding process of the glass encapsulation assembly.

The present disclosure has been described above in conjunction with the specific embodiments, but it should be clear to persons skilled in the art that these descriptions are all exemplary and do not limit the protection scope of the present disclosure. Persons skilled in the art can make various variations and modifications to the present disclosure according to the spirit and principles of the present disclosure, and these variations and modifications also fall within the scope of the present disclosure.

## Claims

1. A glass encapsulation assembly, comprising a glass substrate and a first encapsulation;
wherein the glass substrate has a periphery, a portion of which is wrapped by the first encapsulation to form a wrapped edge, and the other portion of which is exposed outside the first encapsulation to form an exposed edge;
the wrapped edge is provided with at least one snap-fit portion, which is snap-fitted with the first encapsulation to prevent the first encapsulation from being separated from the wrapped edge.

2. The glass encapsulation assembly according to claim 1, wherein at least one of the at least one snap-fit portion is a groove recessed inward from the wrapped edge into the glass substrate, and the first encapsulation fills the groove to form a snap fit with it.

3. The glass encapsulation assembly according to claim 2, wherein a depth of the groove is not less than 1.0 mm.

4. The glass encapsulation assembly according to claim 1, wherein at least one of the at least one snap-fit portion is a protrusion that protrudes outward from the wrapped edge away from the glass substrate, and the first encapsulation wraps the protrusion to form a snap fit with it.

5. The glass encapsulation assembly according to claim 4, wherein a height of the protrusion is not less than 1.0 mm.

6. The glass encapsulation assembly according to claim 1, wherein the periphery comprises a plurality of edges; and
the exposed edge comprises at least one edge, or the exposed edge is a portion of one edge.

7. The glass encapsulation assembly according to claim 1, wherein the periphery comprises at least three edges;
the wrapped edge comprises at least two edges; and
at least one of the at least two edges is provided with one or more of the snap-fit portions.

8. The glass encapsulation assembly according to claim 1, wherein the first encapsulation has a first end and a second end opposite to each other in a direction around the wrapped edge, the wrapped edge is provided with at least two snap-fit portions corresponding to the first end and the second end, and the first end and the second end are snap-fitted with the snap-fit portions, respectively.

9. The glass encapsulation assembly according to claim 8, wherein the first end and the second end are located at two corners of the periphery, respectively, the two corners are provided with the snap-fit portions, respectively, and the first end and the second end are snap-fitted with the snap-fit portions located at the two corners, respectively.

10. The glass encapsulation assembly according to claim 1, wherein the first encapsulation extends continuously along the wrapped edge.

11. The glass encapsulation assembly according to claim 1, further comprising:
a second encapsulation that wraps at least a portion of the first encapsulation and the entire or part of the periphery of the glass substrate.

12. The glass encapsulation assembly according to claim 11, wherein the first encapsulation is a hard encapsulation, and the second encapsulation is a soft encapsulation.
